Europäisches Patentamt

European Patent Office

Office européen des brevets

(19)

(11) **EP 1 489 543 A1**

(12) **EUROPEAN PATENT APPLICATION**
published in accordance with Art. 158(3) EPC

(43) Date of publication:
**22.12.2004 Bulletin 2004/52**

(51) Int Cl.7: **G06F 17/60**

(21) Application number: **03712816.2**

(22) Date of filing: **20.03.2003**

(86) International application number:
**PCT/JP2003/003475**

(87) International publication number:
**WO 2003/081501 (02.10.2003 Gazette 2003/40)**

(84) Designated Contracting States:
**IT**

(30) Priority: **27.03.2002 JP 2002089774**

(71) Applicant: **Kabushiki Kaisha Toshiba**
**Tokyo 105-8001 (JP)**

(72) Inventors:
• **Kubo, Ryo**
**Asao-ku, Kawasaki-shi, Kanagawa 215-0018 (JP)**
• **Iwai, Masami**
**Yokohama-shi, Kanagawa 226-0003 (JP)**

• **Kano, Yasuhiro**
**Tokorozawa-shi, Saitama 359-0003 (JP)**
• **Inubushi, Hiroyuki**
**Fuchu-shi, Tokyo 183-0042 (JP)**
• **Nishimura, Mariko, 612, Tsurumi-Sky-Heights**
**Yokohama-shi, Kanagawa 230-0004 (JP)**
• **Uchida, Yasushi**
**Midori-ku, Yokohama-shi, Kanagawa 226-00 (JP)**

(74) Representative: **Henkel, Feiler & Hänzel**
**Möhlstrasse 37**
**81675 München (DE)**

(54) **ASSET MANAGEMENT DEVICE, ASSET MANAGEMENT METHOD, AND ASSET MANAGEMENT CONSIGNMENT CONTRACT METHOD**

(57)    An evaluation period c to n (including k) from the past c to the future n for asset facilities to be managed is set. Based on the result value of the past profit and the forecast value of the future profit during the evaluation period and the fixed asset value of the facilities before and after the evaluation period, a management evaluation coefficient X during a set evaluation period, which includes a sum of past profit Pi' (i = C to k - 1), a sum of future forecast profit Pi (i = k to n), and a difference in fixed asset value before and after the evaluation period (Vn - Vc), is computed. If management is evaluated based on the management evaluation coefficient X, even though the asset facilities have features that the purchase price is high, the delivery time period is long and the lifetime is long, they can be operated and managed by determining a management policy that targets a long-term profit that reflects the characteristics of the facilities.

| Sum of past profits $$\sum_{i=c}^{k-1} P'_i$$ | Sum of future forecast profits $$\sum_{i=k}^{n} P_i$$ | Difference in fixed asset value between before and after evaluation time period $$V_n - V_c$$ |
|---|---|---|

Actual value          Future value of asset

F I G. 6

EP 1 489 543 A1

**Description**

Technical Field

The present invention relates to an asset management apparatus, an asset management method and an asset management contract method used for operating and managing assets and supporting the operation and management. The assets imply production facilities for producing raw materials, products, energy and the like, which are used in various industries and provided for general consumers.

Background Art

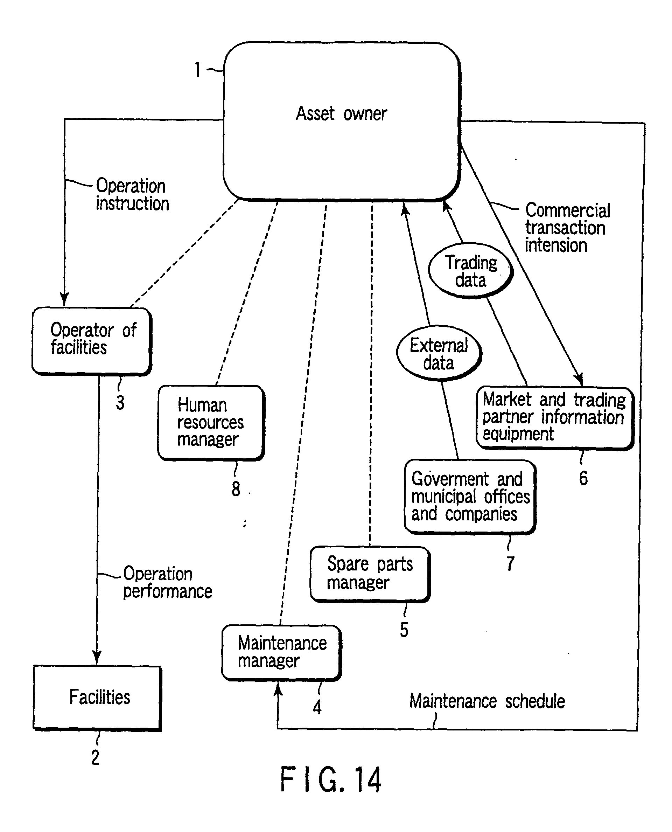

FIG. 14 is a diagram showing a prior art asset management model for managing assets such as a generator set by an asset owner.

An asset owner 1 sells a product of facilities 2 to gain a profit.

The asset owner 1 therefore has to make an investment in the production facilities 2 for manufacturing products, operate the facilities 2 (3), perform maintenance (4), manage spare parts (5), work procure, raw materials and fuels (6), obtain insurance (6), make a demand forecast (7), draw up an operation schedule (1), sell products (6), contact the administration for payment of taxes (7), coordinate the relationship with the neighborhood and community, etc. through the asset owner 1 by himself or herself, an operator 3, a maintenance manager 4, a spare parts manager 5, a market and trading partner information equipment 6, government and municipal offices and companies 7, and a human-resources manager 8.

In order to operate and manage the assets, therefore, the asset owner 1 has to employ (8) human resources having knowledge, experience and know-how of the respective items (2 to 8) described above. In FIG. 14, the broken line connecting the asset owner (manager) 1 and each of the operator 3 of the facilities 2, human-resources manager 8, maintenance manager 4 and spare parts manager 5 indicates a relationship in employment of human resources.

In accordance with recent sudden changes in economic activities with the development of information technology and in economic conditions throughout a region with borderless economic activities, a company has to change rapidly. In such a company, it is common to reduce reserved assets in order to quickly respond to changes in economic conditions. In these days, there are fables companies that are involved only in the development design and sales without production facilities and outsource the production activities, airline companies that lease and operate airplanes that are production materials, and the like, as examples of reduction in reserved assets.

However, it is difficult to do outsourcing of production facilities themselves in industries requiring large-sized production facilities that are difficult to divert to others. Such an industry cannot help but reserve its assets. It is thus difficult to compress the production facilities themselves and necessary to reduce the reserved assets and fixed costs by another method.

An industry requiring a huge apparatus for supplying power and gas, such as the steel industry and the chemical product manufacturing industry, is a typical example of the industry as described above. In general, the capital investment of the huge apparatus industry becomes heavy and an efficient operation of the facilities is essential to reduction in costs of manufacturing.

On the other hand, a significant challenge to recent company management is to cut and appropriately use human resources in companies as well as to compress the reserved facilities. However, it is not easy to cut the human resources while appropriately keeping the quality of products and the delivery time thereof.

Under the above circumstances, the outsourcing of operations of facilities themselves has recently been started. More specifically, the owner of the facilities commissions outside companies or individuals to manufacture products using the facilities, thereby minimizing human resources and facilities related thereto and compressing the assets in a wide sense.

The owner of the facilities pays commission fees to the contract company. There are not a few contracts in which the commission fees vary with the results of the operations.

In other words, the owner of the facilities pays the fees in accordance with the operation results to enhance the motivation of the contract company to make an improvement.

In order to yield the operation results of the contract company that is commissioned to operate the owner's facilities, however, the contract company heavily uses the facilities more than necessary and fails to perform necessary maintenance to pursue an immediate profit. In other words, a short-term profit pursued by the party who is commissioned to operate the facilities (contract company) conflicts with a mid- and long-term profit pursued by the party who commissions the contract company to operate the facilities (owner). Consequently, there occurs a problem that the contract company does not satisfactorily enhance the motivation to make an improvement.

Disclosure of Invention

An object of the present invention is to perform an operation of asset facilities with efficiency by evaluating the results of the operation in which a short-term profit and a mid- and long-term profit do not conflict with each other.

An asset management apparatus comprises a past profit computing section which computes a result value of a past profit obtained by operating and managing assets including facilities to be managed, a forecast profit computing section which computes a forecast value of a future profit obtained by operating and managing the assets including the facilities to be managed, an asset value computing section which computes a fixed asset value of the assets including the facilities to be managed, and an evaluation value computing section which computes a management evaluation value during a fixed time period from the past to the future based on the past profit computed by the past profit computing section, the future profit computed by the forecast profit computing section, and the fixed asset value computed by the asset value computing section.

According to the asset management apparatus, the profit result computing section computes a result value of the past profit obtained by operating and managing the assets including the facilities to be managed. The forecast profit computing section computes a forecast value of the future profit obtained by operating and managing the assets. The asset value computing section computes a fixed asset value of the assets. The evaluation value computing section computes a management evaluation value during a fixed time period from the past to the future based on the computed past and future profits and the computed fixed asset value. Management evaluation can thus be performed with an eye toward the mid- and long-term profit.

In an asset management contract method, an asset owner commissions an asset manager to manage assets using the asset management apparatus.

According to the asset management contract method, management evaluation can be performed with an eye toward the mid- and long-term profit. Therefore, the assets can be managed without any conflict between a mid- and long-term profit pursued by the asset owner and a short-term profit pursued by the asset manager.

Brief Description of Drawings

FIG. 1 is a block diagram showing the entire configuration of a facilities asset management system using an asset management apparatus 11 according to one embodiment of the present invention;

FIG. 2 is a chart showing the structure of operation data d1 input to the server device 12 of the asset management apparatus 11 as asset data A;

FIG. 3A is a table showing the structure of maintenance data d3 input to the server device 12 of the asset management apparatus 11 as asset data A;

FIG. 3B is a table showing the structure of human resources data d2 input to the server device 12 of the asset management apparatus 11 as asset data A;

FIG. 4A is a table showing the structure of trading data C input to the server device 12 of the asset management apparatus 11;

FIG. 4B is a table showing the structure of external data B input to the server device 12 of the asset management apparatus 11;

FIG. 4C is a table showing the structure of asset data C input to the server device 12 of the asset management apparatus 11;

FIG. 5 is a flowchart showing data processing that is executed in the server device 12 of the asset management apparatus 11;

FIG. 6 is a diagram showing a structure of the management evaluation coefficient X obtained by the data processing section 16 of the server device 12 in the asset management apparatus 11;

FIG. 7 is a graph showing a change in profit during the management evaluation period of asset facilities that is initialized in accordance with the computation of a management evaluation coefficient X by the asset management apparatus 11;

FIG. 8A is a table showing a structure of power sales (future forecast sales S) in the generator asset facilities managed by the asset management apparatus 11 and forecast generating costs B included in the power sales;

FIG. 8B is a table showing a structure of power sales (past sales S') in the generator asset facilities managed by the asset management apparatus 11 and generating costs B' included in the power sales;

FIG. 9 is a graph showing a variation curve of a fixed asset evaluation V (which is proportionate to an efficiency variation curve) from the past to the future in the entire asset facilities to be managed by the asset management apparatus 11;

FIG. 10 is a graph showing operation schedule data that is created on the basis of the management evaluation coefficient X during an evaluation period set from the past to the future by the asset management apparatus 11;
FIG. 11 is a view showing a parameter setting button of the management evaluation coefficient X displayed and output on the display screen of the data input section 14 in the asset management apparatus 11;
FIG. 12 is a flowchart showing the procedure of setting the parameters to determine the policy of management and manage the asset facilities in accordance with the computation of the management evaluation coefficient X in the asset management apparatus 11;
FIG. 13 is a block-diagram showing the entire configuration of a facilities asset management system when the asset owner 1 commissions the outside asset manager 10 to operate and manage the asset facilities using the asset management apparatus 11 according to the embodiment of the present invention; and
FIG. 14 is a diagram showing a prior art asset management model for managing assets such as a generator set by an asset owner.

Best Mode for Carrying Out the Invention

An embodiment of the present invention will now be described with reference to the drawings.

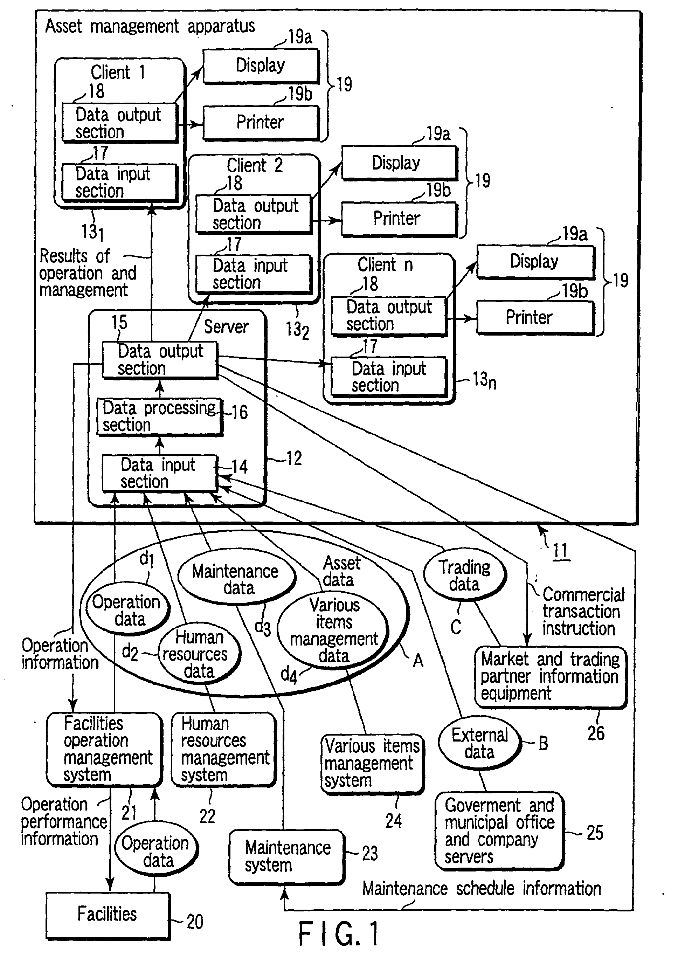

FIG. 1 is a block diagram showing the entire configuration of a facilities asset management system using an asset management apparatus 11 according to one embodiment of the present invention.
As facilities assets to be managed by the asset management apparatus, there are production facilities in various industries, such as a generator and its incidental facilities, a manufacturing apparatus for chemicals, industry products and the like, and a water treatment apparatus. The embodiment will be described by assuming the generator set to be assets.

[Configuration of Asset Management Apparatus]

The asset management apparatus 11 principally includes a server device 12 that performs an evaluation process of asset management. The asset management apparatus 11 also includes client devices 131 to 13n that correspond to a plurality of clients 1 to n, respectively and displays and outputs evaluation results of the asset management. A data input section 14 of the server device 12 is supplied with various types of data from an operation management system 21 of a generator set 20, a human resources management system 22, a maintenance system 23, a various items management system 24, government and municipal office and company servers 25, and market and trading partner information equipment 26. A data output section 15 of the server device 12 outputs various types of data to the respective client devices 131 to 13n, operation management system 21, maintenance system 23, and market and trading partner information equipment 26.
In the asset management apparatus 11, the server device 12 for performing an asset evaluation process has a data processing section 16 between the data input section 14 and data output section 15. The data processing section 16 performs an asset evaluation process based on the data input by the data input section.
The client devices 131 to 13n for displaying the evaluation results based on the asset evaluation process performed by the server device 12 are each made up of a data input section 17 that receives evaluation result data from the server device 12, a data output section 18 that outputs the data, and a data display device 19. As the data display devices 19 of the client devices 131 to 13n, there are a CRT display 19a, a printer 19b and the like.
Incidentally, the client devices 131 to 13n can be replaced by external computer terminals. In other words, external computer terminals can be used as the respective client devices 131 to 13n. If, therefore, a user can obtain a means for connection with a communications network in a certain place, the user can use an asset evaluation process performed by the asset management apparatus 11 and its evaluation result data from anywhere in the place.

[Overview of Input/output Data]

There are asset data A, external data B and trading data C as various types of data input to the data input section 14 of the asset management apparatus 11.
The asset data A is data on the asset owned by an asset owner of the power facilities asset. The asset data A includes operation data d1 transmitted from the operation management system 21, human resources data d2 transmitted from the human resources management system 22, maintenance data d3 transmitted from the maintenance system 23, and various items (spare parts) management data d4 transmitted from the various items management system 24.
The external data B is transmitted from the government and municipal office and company servers 25. The external data B includes data on economic forecasting such as the corporation statistics published by the government, data issued by the administration such as a tax system, weather information, and neighborhood and community information.

The trading data C is data that depends upon the market trading. The trading data C includes product trading information, raw material trading information, fuel trading information, trading information on the emission credit of global warming gas and environmental pollutant, insurance information, and banking transaction information. Each information (trading data C) is transmitted from its corresponding market and trading partner information equipment 26 to the server device 12 of the asset management apparatus 11.

In the present embodiment, various types of data are automatically or manually input to the server device 12 of the asset management apparatus 11 from the systems (21, 22, 23, 24) for managing the data and the information equipment (25, 26) such as a market and trading partner server through a wired/wireless public circuit or private circuit such as the Internet. When data is provided through publications such as books, it is input not through a network or on a stand-alone basis if it is done manually.

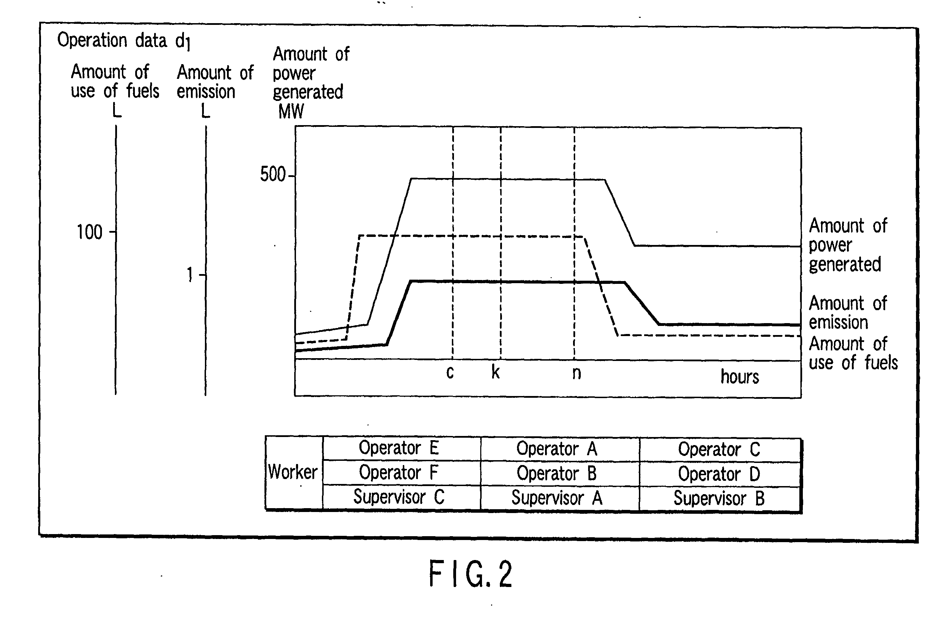

FIG. 2 is a chart showing the structure of operation data d1 input to the server device 12 of the asset management apparatus 11 as asset data A.

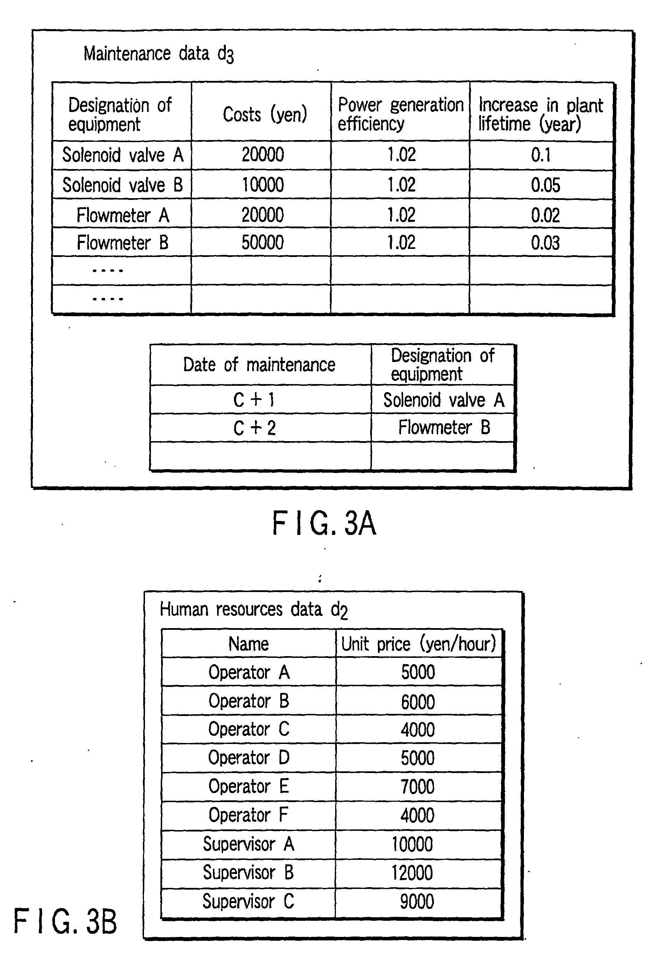

FIG. 3 is tables showing the structures of maintenance data d3 and human resources data d2 input to the server device 12 of the asset management apparatus 11 as asset data A.

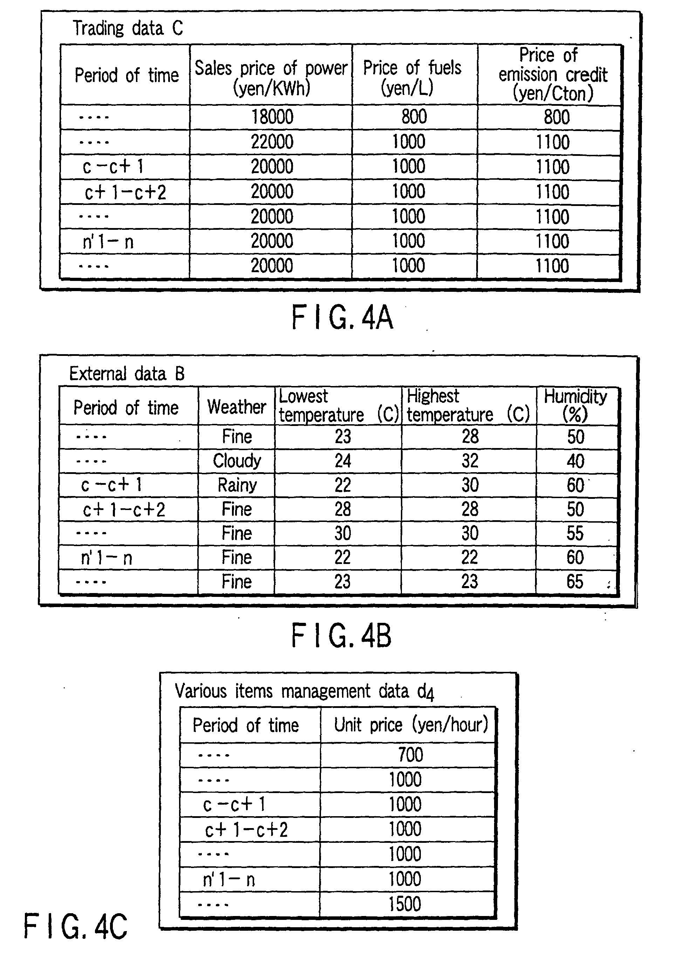

FIG. 4 is a table showing the structures of trading data C, external data B and various items management data d4 as asset data A input to the server device 12 of the asset management apparatus 11.

Of the asset data A, the operation data d1 is input on the basis of the operation information supplied to the power facilities 20 from the operation management system 21 and its feedback information. The operation data d1 is input as temporal transition data of an amount of power generated as shown in FIG. 2.

The human resources data d2 is input by the human resources management system 22 on the basis of human resources management information that targets the operators of all the asset facilities. The human resources data d2 includes a unit price per hour for each person, working hours, and labor costs computed by multiplying the unit price and the working hours together, as shown in FIG. 3B.

The maintenance data d3 is managed and input by the maintenance system 23. The maintenance data d3 includes designations of respective devices that make up the generator set 20, costs for maintenance, and power generation efficiency coefficients, which correspond to each other, as shown in FIG. 3A. The power generation efficiency coefficients indicate deviations from the conventional power generation efficiency when the devices are replaced. For example, the cost for replacing a solenoid valve A is 20000 yen, and the power generation efficiency is 1.02 times as high as the conventional power generation efficiency.

The trading data C is supplied from the market and trading partner information equipment (server, etc.) 26 based on the trading of the sale of generated electricity (power), that of the purchase of fuels and the like. The trading data C includes the sales price of generated electricity (power), the price of fuels, and the price of the emission credit of global warming gas and environmental pollutant at different times from the past to the future.

The external data B is supplied from the corresponding government and municipal office and company servers 25. The external data B includes the actual measured values and forecast values of weather, temperature and humidity at different times from the past to the future, as shown in FIG. 4B.

The server device 12 of the asset management apparatus 11 computes and outputs a management evaluation coefficient X, described later, from the past to the future on the basis of the asset data A supplied from the operation management system 21, human resources management system 22, maintenance system 23, and various items management system 24, the external data B supplied from the government and municipal office and company servers 25 and the trading data C supplied from the market and trading partner information equipment 26. Then, the server device 12 displays the operation schedule information of the generator set 20, which corresponds to the optimum management evaluation coefficient X, on the display screen of the data output section 15 and transmits it to the operation management system 21. Further, the server device 12 transmits a commercial transaction instruction required for following the operation schedule to the market and trading partner information equipment 26 and transmits maintenance schedule information required for following the operation schedule to the maintenance system 23.

An operation of the asset management apparatus in the facilities asset management system having the above-described configuration will now be described.

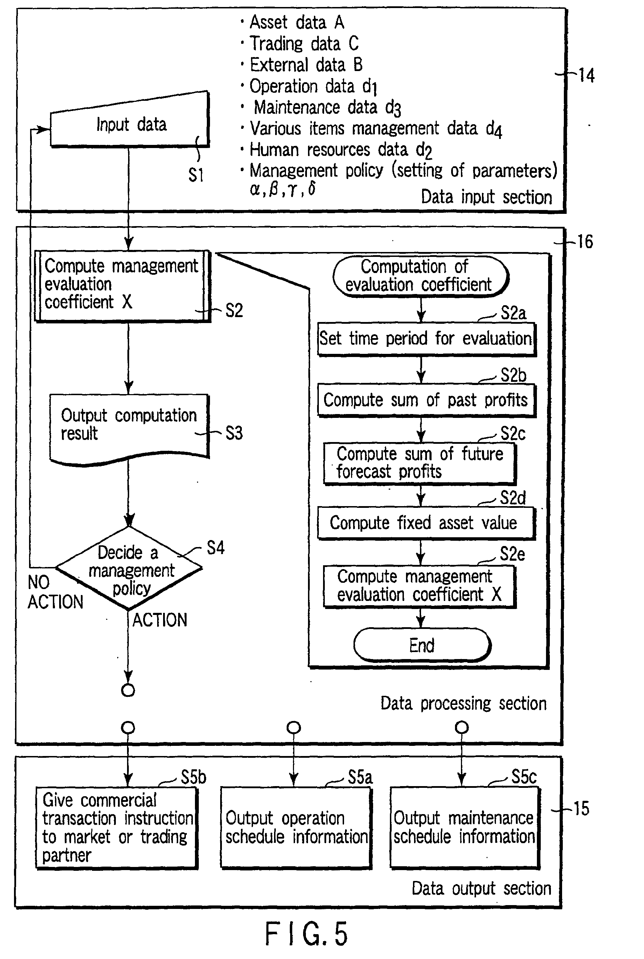

FIG. 5 is a flowchart showing data processing that is executed in the server device 12 of the asset management apparatus 11.

First, the overview of data processing that is executed in the server device 12 of the asset management apparatus 11 will be described.

The data input section 14 of the server device 12 performs a process of inputting the asset data A, external data B and trading data C (step S1).

Thus, the data processing section 16 of the server device 11 computes a management evaluation coefficient X, which will be described in detail later (step S2).

The data output section 15 outputs the computation result data of the management evaluation coefficient X to the respective client devices 13. The computation result data of the management evaluation coefficient X received from the data input section 17 of each of the client devices 13 is supplied to the output device 19 such as the display 19a and printer 19b through the data output section 18 (step S3).

The management evaluation coefficient X varies by changing the conditions such as a period for evaluating the asset facilities targeted for management evaluation and a forecast value. The manager of the asset facilities makes a comparative study of respective evaluation coefficients X computed in accordance with input data (A, B, C) based on various conditions, and acquires result data that is the most suitable for the management of the asset facilities. In other words, the manager of the asset facilities decides a policy to manage the asset facilities based on the management evaluation coefficient X (step S4). Then, the operation schedule information of the generator set 20 is supplied to the operation management system 21 based on the conditions of the input data (A, B, C) that are capable of obtaining the selectively determined management evaluation coefficient X (step S5a). Concurrently with this, a commercial transaction instruction such as the procurement of fuels necessary for following the operation schedule and the sale of generated electricity (power) is given to the market and trading partner information equipment (server) 26 (step S5b). The maintenance schedule information necessary for following the operation schedule is supplied to the maintenance system 23 (step S5c).

In this case, the commercial transaction instruction is directly given to the market and trading partner information equipment (server) 26 through a telephone, a document, a wired or wireless public circuit such as the Internet, and a private circuit.

Furthermore, the operation schedule information of the generator set 20, which is based on the management evaluation coefficient X computed and selectively determined on the basis of the input data (A, B, C) to the asset management apparatus 11, is supplied to the operation management system 21 by hand and through a document, a wired or wireless public circuit such as the Internet, and a private circuit. The operation schedule information input to the operation management system 21 is reflected in the operation of the generator set 20 as an operation control signal. If the operation management system 21 is not provided, the operation schedule information is manually reflected in the operation of the generator set 20.

The operation schedule information of the generator set 20 is displayed on the display screen of the data output section 15 and by the respective client devices 13 and the operation management system 21.

[Data Processing Section 16 (Management Evaluation Method)]

A process of computing a management evaluation coefficient X in the data processing section 16 using various types of data (A, B, C) input by the data input section 14 of the server device 12 will now be described in detail.

The conventional management evaluation is performed by computing an appropriate accounting period profit (sum of past profits).. The management evaluation according to one embodiment of the present invention is performed by computing a management evaluation coefficient X using two items "sum of profits forecast in the future" and "variations in fixed asset value before and after an evaluation period" in addition to the conventional item "sum of past profits."

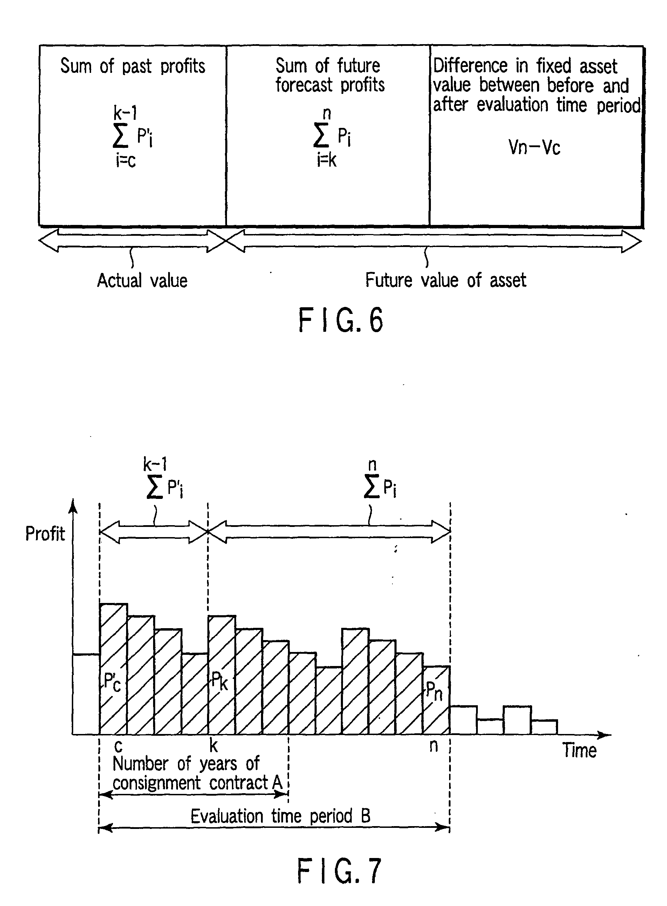

FIG. 6 is a diagram showing a structure of the management evaluation coefficient X obtained by the data processing section 16 of the server device 12 in the asset management apparatus 11.

As shown in FIG. 6, the management evaluation coefficient X computed by the server device 12 of the asset management apparatus 11 includes a sum of past profits, a sum of future forecast profits, and a difference in fixed asset value between before and after an evaluation time period.

(Section of Setting an Evaluation Period: Step S2a)

First, a period for management evaluation is set. As the initial date, a certain time in the past when the facilities were introduced or the present time when they are introduced. The lifetime of facilities is set as the stop time of evaluation or a certain time in the future is set as a milestone of management planning.

The evaluation period can newly be set at short time intervals of accounting periods and the like or can always be set to the same period. There is another method of obtaining a management evaluation coefficient X by setting a plurality of periods and weighted-averaging evaluation results of the respective periods. Therefore, the evaluation period is divided into unit periods such as hour, day, month and accounting period.

FIG. 7 is a graph showing a change in profit during the management evaluation period of asset facilities that is initialized in accordance with the computation of a management evaluation coefficient X by the management asset apparatus 11.

The evaluation period is divided into unit periods i such as hour, day, month and accounting period, and the initial term, the current term and the final term are indicated by c, k and n, respectively.

(Section of Computing Sum of Past Profits: Step S2b)

The sum of past profits, which is the first parameter, is equal to the sum of $P_C'$, $P_{c+1}'$, $P_{c+2}'$, ..., $P_{k-1}'$ as shown in FIG. 7 and expressed by the following equation 1:

$$\sum_{i=c}^{k-1} P_i' \qquad\qquad ... \text{ Equation 1}$$

where Pi' indicates a profit of unit period i and expressed by the following equation 2:

$$P_i' = S_i' - B_i' \qquad\qquad \text{Equation 2}$$

where Si' indicates the sales during the unit period i and Bi' indicates the generating costs during the unit period i.

Consequently, the sum of past profits Pi' is a difference between the sum of the sales Si' and the sum of the generating costs Bi' and expressed by the following equation 3:

$$\sum_{i=c}^{k-1} P_i' = \sum_{i=c}^{k-1} S_i' - \sum_{i=c}^{k-1} B_i' \qquad\qquad ... \text{ Equation 3}$$

The sales Si' is obtained from power unit price Mi' and amount of power generated W1' by the following equation 4:

$$S_i' = M_i' \, W_i' \qquad\qquad \text{Equation 4}$$

The power unit price Mi' is input as the trading data C and, as shown in FIG. 4A, it is 20000 yen/KWh for a period of (k-c) time. The amount of power generated Wi' can be computed by the starting curve of the operation data d1 and, as shown in FIG. 2, it is 500 (k-c) MW = 500 (MW) x (k-c) (time).

Consequently, the sum of the sales Si' amounts to 10000000(k-c) yen.

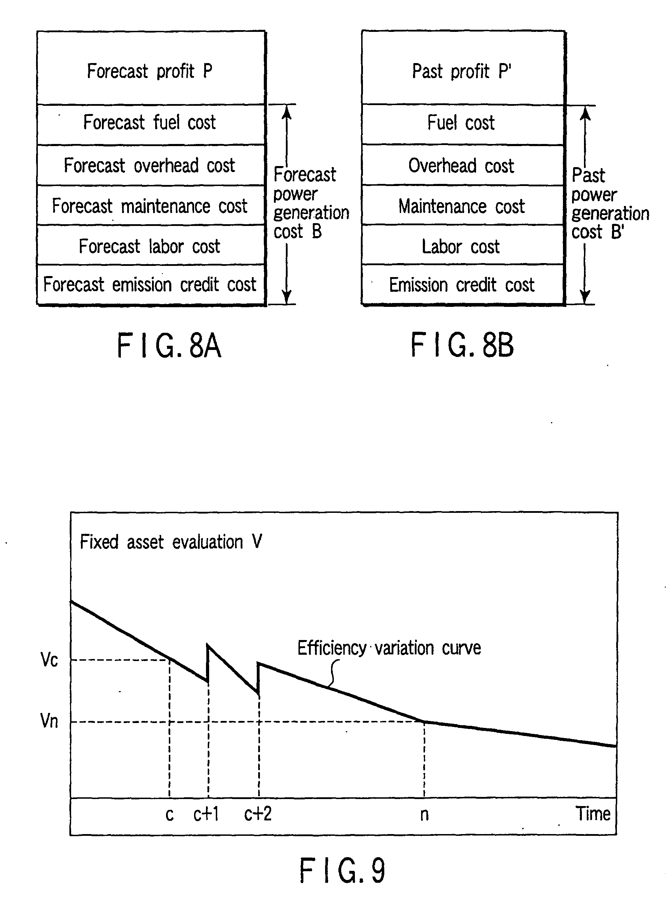

FIG. 8 is a table showing the structure of power sales in the generator asset facilities managed by the asset management apparatus 11 and generating costs included in the power sales. FIG. 8A is a table showing a structure of future forecast sales S and forecast generating costs B. FIG. 8B is a table showing a structure of past sales S' and generating costs B'.

As shown in FIG. 8, the generating costs Bi' include fuel cost, emission credit cost, maintenance cost, labor cost and overhead cost.

The fuel cost is computed by multiplying the amount of use of fuels and the unit price of fuels together. The amount of use of fuels is input based on the curve of the amount of use of fuels of the operation data d1 (see FIG. 2). The unit price of fuels is input based on the trading data (see FIG. 4A). In this example, the unit price of fuels is 1000 yen/liter and the amount of use of fuels is 100 (liter). Thus, the fuel cost amounts to

$$100000 \text{ (k-c) yen} = 1000 \text{ yen} \times 100 \text{ (liter)} \times$$

$$\text{(k-c) (hours)}.$$

The emission credit cost is computed by multiplying the amount of emission of warming gas and environmental pollutant by the unit price of the emission credit. The amount of emission of warming gas and environmental pollutant is input based on the curve of the amount of emission of the operation data d1 (see FIG. 2). The unit price of the emission credit is input based on the trading data (see FIG. 4A). In this example, the unit price of the emission credit is 1100 yen/Cton (carbon ton) and the amount of emission of warming gas and environmental pollutant is 1 (liter). Thus, the emission credit cost amounts to 1100 (k-c) yen = 1100 yen $\times$ 1 (liter) $\times$ (k-c) (hours).

The maintenance cost is computed from the maintenance data d3 (see FIG. 3A). In this example, a solenoid valve A and a flowmeter B are each replaced for a period of (k-c) hours. The maintenance cost of the solenoid valve A is 20000 yen and that of the flowmeter B is 5000 yen. Thus, the maintenance cost amounts to 70000 yen.

The labor cost is computed by multiplying a unit price and working hours together for each person. The unit price of each person is input by the human resources data d2 (see FIG. 3B). The working hours are input by an operator's list of the operation data d1 (see FIG. 2). In this example, an operator A, an operator B and a supervisor A perform an operation for a period of (k-c) time and the unit prices of these persons are 5000 yen, 6000 yen and 10000 yen, respectively. Therefore, the labor cost amounts to 21000 (k - c).

The overhead cost is input by the various items management data d4 (see FIG. 4C). In this case, the overhead cost is 1000 yen per hour and thus amounts to 1000 (k-c) yen.

As described above, the sum of the generating costs Bi' includes the fuel cost, emission credit cost, maintenance cost, labor cost and overhead cost and amounts to 70000 + 123100 (k - c) yen. Since the sales Si' is 10000000 (k - c) yen, 9876900 (k - c) - 70000 yen amounts to the sum of past profits.

(Section of Computing the Sum of Future Predicted Profits: Step S2c)

The sum of future forecast profits, which is the second parameter, to obtain the management evaluation coefficient X is equal to the sum of $P_k$, $P_{k+1}$, $P_{k+2}$, ..., and $P_n$ as shown in FIG. 7 and expressed by the following equation 5:

$$\sum_{i=k}^{n} P_i \qquad\qquad \text{... Equation 5}$$

where Pi is a forecast profit of unit period i, and it is included in the future forecast sales S as shown in FIG. 8A and given by the following equation 6:

$$P_i = S_i - B_i \qquad\qquad \text{Equation 6}$$

where Si is forecast sales and Bi is forecast generating costs. The forecast sales Si are expressed by the following equation 7:

$$S_i = M_i W_i \qquad\qquad \text{Equation 7}$$

where Wi is an amount of power generated and Mi is a sales price per unit amount of power generated. Wi is given by the following equation 8:

$$W_i = A_i \phi_i G F_i \qquad\qquad \text{Equation 8}$$

where Ai is the operating ratio, $\phi i$ is the production efficiency, G is a theoretically expected amount of power generated per unit fuel, and Fi is an mount of raw material. For example, when power is generated from the generator set 20, which is described with reference to the present embodiment of the present invention, Ai is the operating ratio of the generating plant, $\phi i$ is the power generation efficiency of the generating plant, G is an amount of heat generation per unit amount of fuel, and Fi is an amount of fuel.

In the above equation 8 for obtaining the forecast amount Wi of power generated, G and Fi are values proper to respective plants.

The forecast amount Wi of power generated is computed by forecasting demand based on both weather information and past operation data. The weather information includes data of future forecast weather, temperature and humidity, which is input as external data B (see FIG. 4B). An amount Wi' of power generated in the season corresponding to the future forecast period is obtained from the past operation data d1 (see FIG. 2). Thus, the forecast amount Wi of power generated is computed by adding a deviation from data of the future forecast weather, temperature and humidity to the amount Wi' of power generated in the same season as that of the past. In addition to the data associated with seasons obtained as external data B, a financial microanalysis of an event and a company that influence demand for power, a financial macroanalysis that is roughly classified by all of Japanese companies and manufacturing industries, and the like can be added to the demand forecast. Moreover, the computation results of a power demand forecasting apparatus (not shown) for forecasting power demand can be used for the demand forecast.

The power generation efficiency $\phi$ i generally decreases year by year; however, it can be increased by performing maintenance such as an overhaul and an improvement. The result values of the power generation efficiency $\phi$ i can be obtained from the maintenance data d3 as shown in FIG. 3A. Based on the result values of the power generation efficiency, operation data d1 such as the number of starts and stops of the plant, a partial load operation, an overload operation, and the temperature, pressure and distortion of local part is acquired. Furthermore, a forecast curve of the power generation efficiency $\phi$ i is formed in association with the influence of an operation record and a maintenance record of an everyday maintenance operation and a routine check, which are acquired as maintenance data d3, and the extrapolation of the result values. There is a method of forming a forecast curve of the power generation efficiency $\phi$ i based on the result values of a generator set 20 of the same type or a similar type.

FIG. 9 is a graph showing a variation curve of a fixed asset evaluation V (which is proportionate to an efficiency variation curve) from the past to the future in the entire asset facilities to be managed by the above asset management apparatus 11.

According to the variation curve of the fixed asset evaluation V (which is proportionate to the efficiency variation curve), maintenance such as replacement of the solenoid valve A and that of the flowmeter B is performed (see FIG. 3A) at time (c+1) and time (c+2). Thus, the power generation efficiency increases by 1.02 when maintenance is performed and accordingly the asset evaluation increases.

A forecast value of the power generation efficiency $\phi$ i is obtained from the future expected curve that is based on the variation curve of the fixed asset evaluation V (which is proportionate to the efficiency variation curve), and an operating ratio forecast value Ai of the generator set 20 is computed by the above equation 8. Then, forecast operation data including the forecast starting curve of the generator plant 20 and others, as shown in FIG. 2, is obtained from the computed operating ratio forecast value Ai.

Based on the forecast operation data, fuel cost, labor cost, emission credit cost, overhead cost and maintenance cost are computed by the same procedure as that of computing the generating costs Bi' by the computation (step S2b) of the sum of the past profits. The future unit price of each of the costs is computed by incorporating the forecast rate of economic growth into the current unit price.

The forecast value Bi of generating costs is computed by the above procedure and the sum of future forecast profits is computed according to the above equations 5 to 7.

(Section of Computing a Fixed Asset Value: Step S2d)

The variation V in fixed asset value before and after an evaluation period, which is the third parameter, is expressed by the following equation 9:

$$V = Vn - Vc \qquad \text{Equation 9}$$

where Vc is the fixed asset value at the start of evaluation and Vn is the fixed asset at the end of the evaluation period.

On the other hand, the fixed asset value Vc is computed by the amount Wi of power that can be generated by the generator set and the fixed asset evaluation coefficient t.

If, therefore, the life of the generator set ends at time m, the fixed asset value Vc at time c is given by the following equation 10:

$$Vc = t \sum_{i=c}^{m} W_i \qquad \text{... Equation 10}$$

The amount Wi of power generated and the lifetime m vary by performing maintenance as shown in FIG. 9.

In the variation curve of the fixed asset evaluation V (which is proportionate to the efficiency variation curve) shown in FIG. 9, when the facilities are renovated (maintained) at time c+1 and time c+2, the power generation efficiency increases and so does the lifetime m. Thus, the asset value Vi rises temporarily.

(Section of Computing Management Evaluation Coefficient X: Step S2e)

In order to make management evaluations using three parameters of "sum of past profits Pi'," "sum of future forecast profits Pi" and "fixed asset value Vn-Vc before and after an evaluation period" described above, the following management evaluation coefficient X (see FIG. 6) is introduced.

Since X is a function of parameters ①, ② and ③, it is expressed as X(P', P, Vn-Vc) and typically given by the following equation 11:

$$X_k = \sum_{i=c}^{k-1} P_i' + \sum_{i=k}^{n} P_i + (V_n - V_c) \qquad \ldots \text{Equation 11}$$

If the terms of the right side of the following equation 12, i.e., "sum of past profits Pi'," "sum of future forecast profits Pi" and "fixed asset value Vn-Vc before and after an evaluation period" are multiplied by their respective coefficients "$\alpha$," "$\beta$" and "$\gamma$", the parameters are weighted under the policy of a manager (asset owner or asset manager).

$$X_k = \alpha \sum_{i=c}^{k-1} P_i' + \beta \sum_{i=k}^{n} P_i + \gamma(V_n - V_c) \qquad \ldots \text{Equation 12}$$

For example, when the manager considers a short-term profit to be important, the parameter $\alpha$ is increased in the above equation 12. When he or she considers a long-term profit to be important, the parameters $\beta$ and $\gamma$ are increased in the above equation 12. The policy of the management can thus be reflected in the respective parameters.

When the manager considers a profit of the current term k to be important, X is defined by the following equation 13 and the policy of the management can be reflected by increasing $\delta$.

$$X_k = \alpha \sum_{i=c}^{k-1} P_i' + \beta \sum_{i=k+1}^{n} P_i + \gamma(V_n - V_c) + \delta P_k$$

$$\ldots \text{Equation 13}$$

Maximizing the management evaluation coefficient X provided as described above, the optimum management policy can be obtained.

Thus, a target value of forecast sales Si is obtained from the forecast profit (Pi = Si - Bi: equation 6) when the management evaluation coefficient X is computed by weighting the respective parameters under the policy of a manager (asset owner or asset manager). Based on the operation result data (d1) that targets the amount Wi of power generated, which is obtained by inverse computation from the equation (Si = MiWi: equation 7) for computing the forecast sales Si, operation schedule information for operating the generator set 20 in accordance with the target is produced and supplied to the operation management system 21.

Concurrently with this, a commercial transaction instruction to sell electricity to the market as a product and procure fuels is given to its corresponding market and trading partner information equipment (server) 26 in association with the operation of the generator set 20, which is based on the operation schedule information.

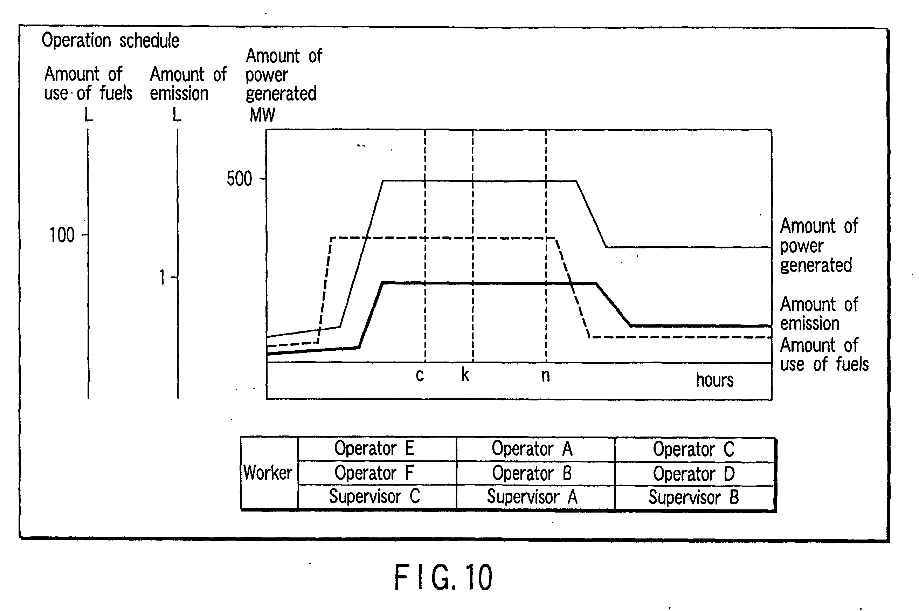

The operation schedule information that is produced using each forecast value as a target value based on the management evaluation coefficient X weighted under the policy of the management is obtained as an amount of the product (amount of power generated) per unit period during the evaluation period. The operation schedule information is output from the data output section 15 and displayed on the display screen of each section as a graph or a table of the operation schedule of the generator set as shown in FIG. 10.

FIG. 10 is a graph showing operation schedule data that is created on the basis of the management evaluation coefficient X during an evaluation period set from the past to the future by the asset management apparatus 11.

The parameters $\alpha$, $\beta$, $\gamma$ and $\delta$ that are weighted under the policy of the manager (asset owner or asset manager) are set and operated to compute a management evaluation coefficient X. Thus, different evaluation coefficients X are computed in accordance with the settings of weighting of the weighted parameters $\alpha$, $\beta$, $\gamma$ and $\delta$. Thus, the operation schedule information that is produced using each forecast value as a target value based on the management evaluation coefficient X also varies with the settings of the weighted parameters. For this reason, the curve of the operation schedule data as shown in FIG. 10 also varies with the weighting of the management policy.

Consequently, the manager (asset owner or asset manager) can visually confirm the operation schedule that is based on the management evaluation coefficient X under the manager's management policy and decide the optimum operating policy of the asset facilities.

The procedure of visually displaying the operation schedule corresponding to the setting and input of each of the weighted parameters $\alpha$, $\beta$, $\gamma$ and $\delta$ corresponding to the management evaluation coefficient X and determining a desired operation schedule (operating policy) to manage the asset facilities (20) will now be described.

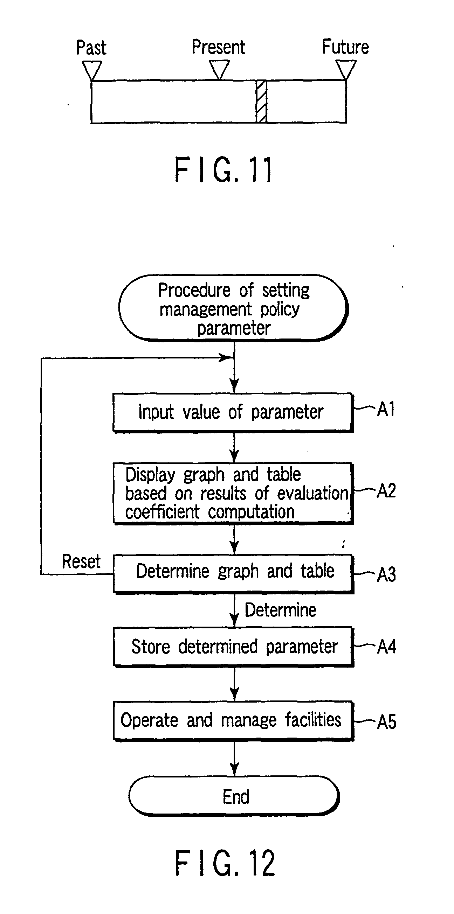

FIG. 11 is a view showing a parameter setting button of the management evaluation coefficient X displayed and output on the display screen of the data input section 14 in the asset management apparatus 11.

FIG. 12 is a flowchart showing the procedure of setting the parameters to determine the policy of management and manage the asset facilities in accordance with the computation of the management evaluation coefficient X in the asset management apparatus 11.

In accordance with any one of cases where the manager (asset owner or asset manager) considers a short-term profit to be important, where the manager considers a long-term profit to be important and where the manager considers a current-term profit to be important, the parameter setting button of the management evaluation coefficient X as shown in FIG. 11 is moved to an arbitrary weighting position in accordance with the scales of "past," "future" and "present." As the parameter setting button moves, the values of the parameters $\alpha$, $\beta$, $\gamma$. and $\delta$ are changed and input (step A1). Whenever the values of the parameters $\alpha$, $\beta$, $\gamma$ and $\delta$ are changed and input, the management evaluation coefficient X corresponding to the set value of each parameter is computed and the graph and table of the corresponding operation schedule data (see FIG. 10) are changed and displayed on the display screen of the data output section 15 (step A2).

For example, when the past profit is considered to be important, the weighting of the parameter $\alpha$ is made greater than those of the other parameters. Similarly, when the current and future profits are considered to be important, the weightings of the parameters $\delta$ and $\beta$ are increased.

When the operation schedule data corresponding to the management evaluation coefficient X that conforms to a desired management policy is displayed and determined (step A3), the setting values of the parameters $\alpha$, $\beta$, $\gamma$ and $\delta$ are stored (step A4). Thus, the operation schedule information, which targets the management evaluation coefficient X under the determined management policy, is supplied to the operation management system 21. Concurrently with. this, a commercial transaction instruction to sell electricity as a product to the market and procure fuels is given to its corresponding market and trading partner information equipment (server) 26 in association with the operation of the generator set 20 that is based on the operation schedule information. Then, the flow goes to a step of operating and managing the facilities 20 (step A5).

Consequently, according to the asset management apparatus 11 having the above configuration, even when the operation of facilities having features that the purchase price is high, the delivery time period is long and the lifetime is long is the source of profits, the profits of a single accounting period do not occupy a large part of the management evaluation material, but a management policy that targets a long-term profit that reflects the characteristics of the facilities can be determined and the facilities can be operated and managed.

The parameters $\alpha$, $\beta$, $\gamma$ and $\delta$ are varied under the conditions of the equation 13, and the proportions of values in the following expression to $X_k$ under the respective conditions are compared with each other.

$$\alpha \sum_{i=c}^{k-1} P_i', \quad \beta \sum_{i=k+1}^{n} P_i, \quad \gamma(V_n - V_c), \quad \delta P_k$$

Thus, the parameters $\alpha$, $\beta$, $\gamma$ and $\delta$ can be. determined by evaluating how much each evaluation item such as the profit $P_k$ in the current term k contributes to the management evaluation coefficient $X_k$.

Short-term profit

$$\sum_{i=c}^{k-1} P_i{}'$$

Since, moreover, the parameters $\alpha$, $\beta$, $\gamma$ and $\delta$ are weightings of different evaluation items, they represent the following correlation and vary under the following conditions.

$$\alpha + \beta + \gamma + \delta = 1$$

The proportions of respective values in the following expression to $X_k$ under the respective conditions can be compared with each other.

$$\alpha \sum_{i=c}^{k-1} P_i{}', \quad \beta \sum_{i=k+1}^{n} P_i, \quad \gamma(V_n - V_c), \quad \delta P_k$$

According to the computation of the management evaluation coefficient X in the embodiment described above, the sales prices of generated electricity (products), materials, fuels, etc., which are trading data C supplied from the market and trading partner information equipment (server) 26, are all transaction prices of result values. For this reason, the trading data C includes an influence of foreign factors such as business. Acquiring the trading data C as an average transaction price and detecting a difference or a ratio between the average transaction price and the actual transaction price, the influence of foreign factors on the transaction price can be eliminated. If, furthermore, the volume of market transaction is used as a reference value, the foreign factors on the demand can be eliminated.

In the embodiment described above, the management of the asset facilities is evaluated and the management policy thereof is determined when the asset owner is equal to the asset manager. As will be described in the following item "Management Contract," the asset owner can use the above asset management apparatus 11 when he or she commissions outside asset managers to operate and manage the asset facilities.

[Management Contract]

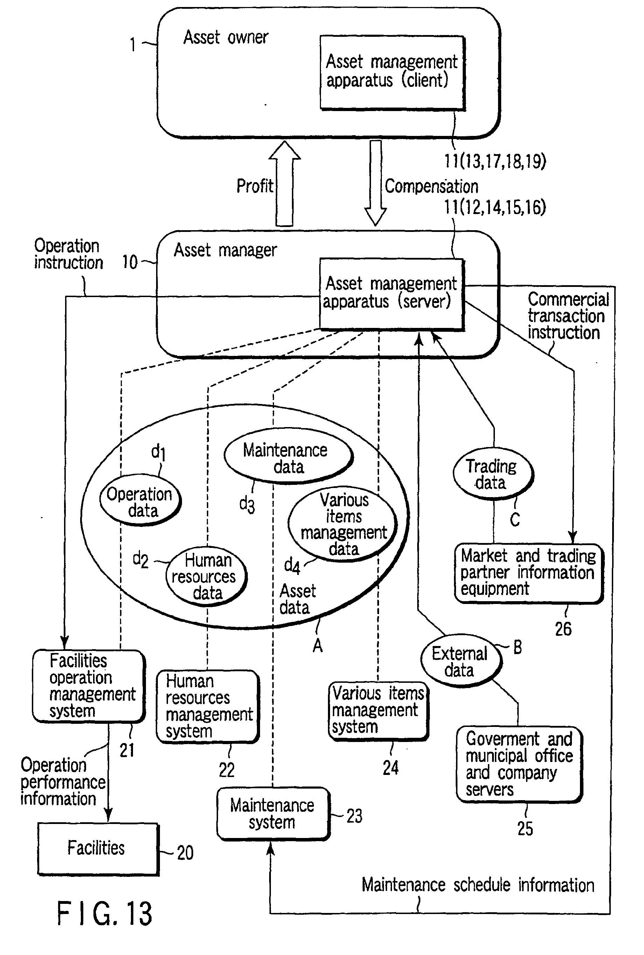

FIG. 13 is a block diagram showing the entire configuration of a facilities asset management system when the asset owner 1 commissions the outside asset manager 10 to operate and manage the asset facilities using the asset management apparatus 11 according to one embodiment of the present invention.

In this case, the asset manager 10 operates and manages the facilities assets using the asset management apparatus 11 according to the foregoing embodiment. The asset management apparatus 11 computes a management evaluation coefficient X and determines a management policy. In the determination stage of the management policy, the asset manager 10 who considers a short-term profit to be important and the asset owner 1 who considers a long-term profit to be important set and input weighted parameters $\alpha$, $\beta$, $\gamma$ and $\delta$ corresponding to the management evaluation coefficient X and decide a desired operation schedule (management policy) .

Thus, even when the asset owner 1 commissions the outside asset manager 10 to operate and manage the asset facilities, a mid- and long-term asset can be evaluated, which can be reflected in the compensation from the asset owner 1 to the asset manager 10. For this reason, the short-term profit pursued by the asset manager 10 and the mid- and long-term profit pursed by the asset owner 1 who commissions the management do not conflict with each other, with the result that the asset facilities can effectively be managed.

In other words, the asset facilities belong to the asset owner 1, and the asset owner 1 commissions the outside asset manager 10 to operate and manage all or some of the asset facilities.

When the above contract is made, an appropriate evaluation method is required in the asset management method between the asset owner 1 and'the asset manager 10. For example, the asset owner 1 commissions the asset manager 10 to operate and manage the assets such that the profit is maximized in the contract term. Thus, the asset manager 10 tries to perform an overload operation for the facilities to increase the profit. Then, the asset manager 10 markedly shortens the lifetime of the facilities and greatly reduces the profit that can naturally be expected even after the contract term.

Based on the computation of the management evaluation coefficient X by the asset management apparatus 11 of the above embodiment, both the asset owner 1 and the asset manager 10 determine an operation policy. Thus, the asset owner 1 can reflect his or her original objective and commission the asset manager 10 to operate and manage the assets.

For example, as shown in FIG. 7, when the asset owner 1 and asset manager 10 make an A-year asset management contract, the asset owner 1 designates an evaluation time period B as a contract condition. If the asset owner 1 determines a compensation to be paid to the asset manager 10 based on the management evaluation coefficient X during the evaluation time period B, the asset manager 10 manages the assets in consideration of the profit during the evaluation time period B rather than that of the contract period A.

A process of determining a compensation based on the management evaluation coefficient X will now be described.

First, a value Q for asset management is determined in advance, irrespective of the management evaluation coefficient X. Then, a management evaluation coefficient Xo of an accounting period o immediately before the asset owner 1 and the asset manager 10 make an asset management contract is obtained. If compensation Rk of an accounting period k, which is to be paid to the asset manager 10, is defined by the following equation 14, a compensation based on the management evaluation coefficient X can be determined.

$$R_k = \frac{X_k}{X_O} Q \qquad \text{Equation 14}$$

In this case, the management evaluation coefficient Xo can be obtained with reference to a plurality of accounting periods as well as a single accounting period. When Xk markedly varies for every accounting period, a compensation can be determined based on the management evaluation coefficient Xo by providing a relaxation coefficient $\lambda$ as shown in the following equation 15.

$$R_k = \lambda \frac{X_k}{X_O} Q \qquad \text{Equation 15}$$

The present invention is not limited to the above embodiment, but various modifications can be made without departing from the subject matter of the invention in the stages of reduction to practice. The above embodiment contains inventions in various stages. Various inventions can be extracted from appropriate combinations of a plurality of components to be disclosed. Even though some of all the components shown in the embodiment are deleted or combined, the structure of the remaining components or that of the combined components can be extracted as an invention if the problem of the invention can be resolved and the advantage of the invention is obtained.

Industrial Applicability

The asset management apparatus is used to operate . and manage asset facilities such as a generator set and support the operation and management. The asset management apparatus evaluates a management result in which a short-term profit and a mid- and long-term profit do not conflict with each other, and manages the asset facilities with efficiency.

**Claims**

**1.** An asset management apparatus (11) comprising:

a past profit computing section (16: S2b) which computes a result value of a past profit obtained by operating and managing assets including facilities (20) to be managed;
a forecast profit computing section (16: S2c) which computes a forecast value of a future profit obtained by operating and managing the assets including the facilities (20) to be managed;
an asset value computing section (16: S2d) which computes a fixed asset value of the assets including the facilities (20) to be managed; and
an evaluation value computing section (16: S2e) which computes a management evaluation value during a fixed time period from the past to the future based on the past profit computed by the past profit computing section (16: S2b), the future profit computed by the forecast profit computing section (16: S2c), and the fixed asset value computed by the asset value computing section (16: S2d).

2. The asset management apparatus (11) according to claim 1, wherein:

the past profit computing section (16: S2b) includes an input section (14) which inputs a sales profit of a product produced by the facilities and a result value of production cost of the product, and the past profit computing section (16: S2b) computes a result value of the past profit by subtracting the production cost from the sales profit of the product input by the input section (14);

the forecast profit computing section (16: S2c) computes a forecast value of the future profit by subtracting forecast production cost, which is required for a theoretical amount of production of the product based on an operating rate and production efficiency of the facilities (20), from a forecast sales profit computed by both the theoretical amount of production of the product and a sales price of the product per unit amount of production;

the asset value computing section (16: S2d) computes a fixed asset value based on an amount of production of a product producible by the facilities (20) and a lifetime of the facilities (20); and

the evaluation value computing section (16: S2e) computes a management evaluation value by adding the result value of the past profit, the forecast value of the future profit and the fixed asset value during a fixed time period'for evaluation, which are arbitrarily set from the past to the future.

3. The asset management apparatus (11) according to claim 2, wherein the evaluation value computing section (16: S2e) computes the management evaluation value by setting different weighted parameters ($\alpha$, $\beta$, $\gamma$) to the past profit, the future profit and the fixed asset value between management evaluation performed based on a short-term profit and management evaluation performed based on a long-term profit.

4. The asset management apparatus (11) according to claim 1, further comprising a data output section (15) which outputs operation data of the facilities (20) during the fixed time period, based.on the management evaluation value during the fixed time period, which is computed by the evaluation value computing section (16: S2e).

5. The asset management apparatus (11) according to claim 2, further comprising a data output section (15) which outputs operation data of the facilities (20) during the fixed time period, based on the management evaluation value during the fixed time period, which is computed by the evaluation value computing section (16: S2e).

6. The asset management apparatus (11) according to claim 3, further comprising a data output section (15) which outputs operation data of the facilities (20) during the fixed time period, based on the management evaluation value during the fixed time period, which is computed by the evaluation value computing section (16: S2e).

7. The asset management apparatus according to claim 4, wherein the data output section (15) outputs operation data of the facilities (20) using operation result data that targets an amount of production of the product of the facilities (20), the operation result data being obtained by performing inverse computation based on the past profit and the future profit included in the management evaluation value during the fixed time period, which is computed by the evaluation value computing section (16: S2e).

8. The asset management apparatus according to claim 5, wherein the data output section (15) outputs operation data of the facilities (20) using operation result data that targets an amount of production of the product of the facilities (20), the operation result data being obtained by performing inverse computation based on the past profit and the future profit included in the management evaluation value during the fixed time period, which is computed by the evaluation value computing section (16: S2e).

9. The asset management apparatus according to claim 6, wherein the data output section (15) outputs operation data of the facilities (20) using operation result data that targets an amount of production of the product of the facilities (20), the operation result data being obtained by performing inverse computation based on the past profit and the future profit included in the management evaluation value during the fixed time period, which is computed by the evaluation value computing section (16: S2e).

10. An asset management method comprising:

computing (S2b) a result value of a past profit obtained by operating and managing assets including facilities (20) to be managed;

computing (S2c) a forecast value of a future profit obtained by operating and managing the assets including the facilities (20) to be managed;

computing (S2d) a fixed asset value of the assets including the facilities (20) to be managed; and

computing (S2e) a management evaluation value during a fixed time period from the past to the future based on the computed past profit (S2b), the computed future profit (S2c), and the computed fixed asset value (S2d) .

**11.** The asset management method according to claim 10, wherein:

the result value of the past profit is computed (S2b) by inputting a sales profit of a product produced by the facilities (20) and a result value of production cost of the product and subtracting the production cost from the sales profit of the product;

the forecast value of the future profit is computed (S2c) by subtracting forecast production cost, which is required for a theoretical amount of production of the product based on an operating rate and production efficiency of the facilities (20), from a forecast sales profit computed by both the theoretical amount of production of the product and a sales price of the product per unit amount of production;

the fixed asset value of the assets is computed (S2d) based on an amount of production of a product producible by the facilities (20) and a lifetime of the facilities (20); and

the management evaluation value is computed (S2e) by adding the result value of the past profit, the forecast value of the future profit, and the fixed asset value during a fixed time period for evaluation, which are arbitrarily set from the past to the future.

**12.** The asset management method according to claim 11, wherein the management evaluation value (S2e) is computed by setting different weighted parameters ($\alpha$, $\beta$, $\gamma$) to the past profit, the future profit and the fixed asset value between management evaluation performed based on a short-term profit and management evaluation performed based on a long-term profit.

**13.** The asset management method according to claim 10, further comprising outputting (S5a) operation data of the facilities (20) during the fixed time period based on the computed management evaluation value (S2e) during the fixed time period.

**14.** The asset management method according to claim 11, further comprising outputting (S5a) operation data of the facilities (20) during the fixed time period based on the computed management evaluation value (S2e) during the fixed time period.

**15.** The asset management method according to claim 12, further comprising outputting (S5a) operation data of the facilities (20) during the fixed time period based on the computed management evaluation value (S2e) during the fixed time period.

**16.** The asset management method according to claim 13, wherein the operation data is output (S5a) using operation result data that targets an amount of production of the product of the facilities (20), the operation result data being obtained by performing inverse computation based on the past profit and the future profit included in the computed management evaluation value (S2e) during the fixed time period.

**17.** The asset management method according to claim 14, wherein the operation data is output (S5a) using operation result data that targets an amount of production of the product of the facilities (20), the operation result data being obtained by performing inverse computation based on the past profit and the future profit included in the computed management evaluation value (S2e) during the fixed time period.

**18.** The asset management method according to claim 15, wherein the operation data is output (S5a) using operation result data that targets an amount of production of the product of the facilities (20), the operation result data being obtained by performing inverse computation based on the past profit and the future profit included in the computed management evaluation value (S2e) during the fixed time period.

**19.** An asset management contract method wherein an asset owner (1) commissions an asset manager (10) to manage assets using the asset management apparatus (11) according to claim 1.

**20.** The asset management contract method according to claim 19, wherein a compensation of the asset manager (10) is determined based on the management evaluation value computed by the evaluation value computing section (16: S2e) of the asset management apparatus (11).

21. An asset management contract method wherein an asset owner (1) commissions an asset manager (10) to manage assets using the asset management method according to claim 10.

22. The asset management contract method according to claim 21, wherein a compensation of the asset manager (10) is determined based on the management evaluation value (S2e) computed by the asset management method.

FIG. 1

Operation data $d_1$

| Worker | Operator E | Operator A | Operator C |
|---|---|---|---|
| | Operator F | Operator B | Operator D |
| | Supervisor C | Supervisor A | Supervisor B |

FIG. 2

EP 1 489 543 A1

Maintenance data $d_3$

| Designation of equipment | Costs (yen) | Power generation efficiency | Increase in plant lifetime (year) |
|---|---|---|---|
| Solenoid valve A | 20000 | 1.02 | 0.1 |
| Solenoid valve B | 10000 | 1.02 | 0.05 |
| Flowmeter A | 20000 | 1.02 | 0.02 |
| Flowmeter B | 50000 | 1.02 | 0.03 |
| . . . . | | | |
| . . . . | | | |

| Date of maintenance | Designation of equipment |
|---|---|
| C + 1 | Solenoid valve A |
| C + 2 | Flowmeter B |
| | |

## F I G. 3A

Human resources data $d_2$

| Name | Unit price (yen/hour) |
|---|---|
| Operator A | 5000 |
| Operator B | 6000 |
| Operator C | 4000 |
| Operator D | 5000 |
| Operator E | 7000 |
| Operator F | 4000 |
| Supervisor A | 10000 |
| Supervisor B | 12000 |
| Supervisor C | 9000 |

## F I G. 3B

19

| Trading data C | | | |
|---|---|---|---|
| Period of time | Sales price of power (yen/KWh) | Price of fuels (yen/L) | Price of emission credit (yen/Cton) |
| . . . . | 18000 | 800 | 800 |
| . . . . | 22000 | 1000 | 1100 |
| $c - c+1$ | 20000 | 1000 | 1100 |
| $c+1 - c+2$ | 20000 | 1000 | 1100 |
| . . . . | 20000 | 1000 | 1100 |
| $n'1 - n$ | 20000 | 1000 | 1100 |
| . . . . | 20000 | 1000 | 1100 |

F I G. 4A

| External data B | | | | |
|---|---|---|---|---|
| Period of time | Weather | Lowest temperature (C) | Highest temperature (C) | Humidity (%) |
| . . . . | Fine | 23 | 28 | 50 |
| . . . . | Cloudy | 24 | 32 | 40 |
| $c - c+1$ | Rainy | 22 | 30 | 60 |
| $c+1 - c+2$ | Fine | 28 | 28 | 50 |
| . . . . | Fine | 30 | 30 | 55 |
| $n'1 - n$ | Fine | 22 | 22 | 60 |
| . . . . | Fine | 23 | 23 | 65 |

F I G. 4B

| Various items management data $d_4$ | |
|---|---|
| Period of time | Unit price (yen/hour) |
| . . . . | 700 |
| . . . . | 1000 |
| $c - c+1$ | 1000 |
| $c+1 - c+2$ | 1000 |
| . . . . | 1000 |
| $n'1 - n$ | 1000 |
| . . . . | 1500 |

F I G. 4C

**Data input section** — 14

Input data — S1

- Asset data A
- Trading data C
- External data B
- Operation data $d_1$
- Maintenance data $d_3$
- Various items management data $d_4$
- Human resources data $d_2$
- Management policy (setting of parameters) $\alpha, \beta, \gamma, \delta$

**Data processing section** — 16

Compute management evaluation coefficient X — S2

Output computation result — S3

Decide a management policy — S4

NO ACTION

ACTION

Computation of evaluation coefficient

Set time period for evaluation — S2a

Compute sum of past profits — S2b

Compute sum of future forecast profits — S2c

Compute fixed asset value — S2d

Compute management evaluation coefficient X — S2e

End

**Data output section** — 15

Give commercial transaction instruction to market or trading partner — S5b

Output operation schedule information — S5a

Output maintenance schedule information — S5c

FIG. 5

| Sum of past profits $\sum_{i=c}^{k-1} P'_i$ | Sum of future forecast profits $\sum_{i=k}^{n} P_i$ | Difference in fixed asset value between before and after evaluation time period $Vn-Vc$ |
|---|---|---|

Actual value ← → Future value of asset

## FIG. 6

Profit

$\sum^{k-1} P'_i$  $\sum^{n} P_i$

$P'_c$  $P'_k$  $P_n$

c  k  n  Time

Number of years of consignment contract A

Evaluation time period B

## FIG. 7

| Forecast profit P |
|---|
| Forecast fuel cost |
| Forecast overhead cost |
| Forecast maintenance cost |
| Forecast labor cost |
| Forecast emission credit cost |

Forecast power generation cost B

## F I G. 8A

| Past profit P' |
|---|
| Fuel cost |
| Overhead cost |
| Maintenance cost |
| Labor cost |
| Emission credit cost |

Past power generation cost B'

## F I G. 8B

Fixed asset evaluation V

Efficiency variation curve

Vc

Vn

c   c+1   c+2     n     Time

## F I G. 9

Operation schedule

| Worker | Operator E | Operator A | Operator C |
| | Operator F | Operator B | Operator D |
| | Supervisor C | Supervisor A | Supervisor B |

FIG. 10

EP 1 489 543 A1

Past             Present            Future

# F I G. 11

Procedure of setting
management policy
parameter

Input value of parameter — A1

Display graph and table
based on results of evaluation — A2
coefficient computation

Reset    Determine graph and table — A3

Determine

Store determined parameter — A4

Operate and manage facilities — A5

End

# F I G. 12

F I G. 13

F I G. 14

| **INTERNATIONAL SEARCH REPORT** | International application No. |
|---|---|
| | PCT/JP03/03475 |

| A. CLASSIFICATION OF SUBJECT MATTER |
|---|
| Int.Cl$^7$ G06F17/60 |
| |
| According to International Patent Classification (IPC) or to both national classification and IPC |

| B. FIELDS SEARCHED |
|---|
| Minimum documentation searched (classification system followed by classification symbols) |
| Int.Cl$^7$ G06F17/60 |

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)
JICST FILE(JOIS), WPI, INSPEC(DIALOG)

| C. DOCUMENTS CONSIDERED TO BE RELEVANT | | |
|---|---|---|
| Category* | Citation of document, with indication, where appropriate, of the relevant passages | Relevant to claim No. |
| A | US 2002-13720 A1 (Sumitomo Heavy Industries, Ltd.), 31 January, 2002 (31.01.02), & JP 2001-357197 A | 1-22 |
| A | JP 2001-312585 A (Matsushita Electric Works, Ltd.), 09 November, 2001 (09.11.01), (Family: none) | 1-22 |
| A | Koichi TABUTA, "Nihon Kigyo Saisei ni Fukaketsu na Keiei Kanri Gijutsu no Taikei", SCM Research Review, 31 August, 1999 (31.08.99), Vol.4, pages 58 to 66 | 1-22 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 April, 2003 (15.04.03) | 30 April, 2003 (30.04.03) |

| Name and mailing address of the ISA/ | Authorized officer |
|---|---|
| Japanese Patent Office | |
| Facsimile No. | Telephone No. |

Form PCT/ISA/210 (second sheet) (July 1998)